# EUROPÄISCHE PATENTSCHRIFT

(11) **EP 0 796 808 B1**
(45) Veröffentlichungstag und Bekanntmachung des Hinweises auf die Patenterteilung: **09.05.2001**
(21) Anmeldenummer: 97103822.9
(22) Anmeldetag: 07.03.1997
(51) Int. Cl.: B65G 53/56

(54) **Rohrweiche für pneumatisch geförderte Schüttgüter**
Pipe switch for pneumatically transported bulk material
Aiguillage de tuyaux pour le transport pneumatique de matière en vrac

(30) Priorität: 21.03.1996 DE 19611121
(43) Veröffentlichungstag der Anmeldung: 24.09.1997
(73) Patentinhaber: Motan-Fuller Verfahrenstechnik GmbH, 88250 Weingarten (DE)
(72) Erfinder: Heep, Michael, Dipl. Ing., 88250 Weingarten (DE)
(74) Vertreter: Riebling, Peter, Dr.-Ing.

(56) Entgegenhaltungen:
- DE-U- 1 825 073
- GB-A- 1 400 056
- US-A- 2 586 144

## Beschreibung

Gegenstand der Erfindung ist eine Rohrweiche für pneumatisch geförderte Schuttgüter, die im Oberbegriff des Anspruches 1 in einzeln angegebenen Merkmalen gekennzeichnet sind.

Eine derartige Rohrweiche ist aus der DE 38 17 349 C2 bekannt.

Sie dient dazu, Schüttgut innerhalb einer pneumatischen Förderleitung vom Aufgabeort zum gewünschten Empfangsort zu leiten und kann im Saug- oder Druckbetrieb eingesetzt werden.

Aufgrund ihrer Bauart wird sie als "Kükenweiche" bezeichnet. In einem geschlossenen Gehäuse sitzt ein drehbares Küken, das mit einem oder zwei Kanälen die Verbindung vom Weicheneingang zum Weichenausgang herstellt.

Dabei spielt die Bauart "kegelig, walzenförmig oder teilkugelförmig ausgebildetes Küken, runder oder eckiger Durchgang" im Gehäuse der Rohrweiche keine spezielle Rolle.

Elastomere statische oder aufblasbare Dichtungen bzw. metallische Anpressungen schließen die Spalte an den Durchbrüchen im Gehäuse um die Kanäle der Küken und machen damit den gewünschten Verbindungsweg dicht.

Die Küken bestehend meistens aus Metall, wie Aluminium, Chromnickelstahl oder gehärtetem Sonderstahlguß und sind damit optimal auf die meisten Schüttgüter angepaßt.

Die Abgangswinkel der Gehäuseabgänge liegen zwischen 35° und 45° und die Weichen gelten, trotz geringer, firmenspezifischer Unterschiede, als genormt, da sie in kompakter, geschlossener Bauweise, außer ihrer Funktion, auch die Anforderungen an Unfallschutz und Umweltschutz in bewährter Weise erfüllen.

Als nachteilig erwies sich diese Weichenausführung immer dann, wenn Schüttgüter gefördert werden mußten, die sich wegen ihrer Eigenschaften an Stoßstellen und Bögen in der Rohrleitung ansetzten, wie z. B. Titandioxid, Ruß oder E-PVC.

Bei der Umlenkung (35° - 45°) innerhalb der Rohrweiche, bauten diese Stoffe sich auf und es kam zur Beeinträchtigung der pneumatischen Förderung.

Beschichtungen der Kükenkanäle mit Kunststoff führten nur teilweise zum Erfolg.

Aus der DE 1 825 073 UI ist eine Weiche mit drei Abgängen bekannt geworden, die, statt eines Kükens, einen federangepreßten Gummischlauch verwendet.

In der mittleren Position ist der Schlauch vom Weicheneingang zum Weichenausgang gerade und glatt, in der linken bzw. rechten Seitenposition macht er, aufgrund seiner Knickung im Mittelpunkt der Drehachse, eine unerwünschte Falte.

Nachteilig sind die Materialmündung und der Schüttgutstoß auf die Knickstelle.

Die gleichen Nachteile der Anhaftung von Fördergut an der inneren Rohrwandung bestehen auch bei der GB-A-1 400 056, bei der ein Verteilerventil offenbart wird mit in einem Gehäuse drehbar gelagerten, in sich starren und gekrümmten Strömungskanal, welcher einen Rohrzugang mit jeweils einem von insgesamt zwei Rohrabgängen verbindet.

Die Umschaltung vom ersten auf den zweiten Rohrabgang erfolgt durch Drehen des gesamten Strömungskanals mittels an beiden Enden des Strömungskanals angebrachter Schieber um einen Winkel kleiner als 180° in Uhrzeigerrichtung. Der Teil des Strömungskanals, welcher zuvor mit dem ersten Rohrabgang in Verbindung war, kommt nach der Umschaltung beim Rohrzugang zu liegen und der Teil des Strömungskanals, welcher zuvor mit dem Rohrzugang in Verbindung war, kommt nach der Umschaltung beim zweiten Rohrabgang zu liegen.

Wird wieder auf den ersten Rohrabgang zurückgeschaltet, dann wird der Strömungskanal in Gegenuhrzeigerrichtung um den gleichen Winkel zurückgedreht und der Ausgangszustand dadurch wieder erreicht. Somit dreht sich bei der Umschaltung vom ersten auf den zweiten Rohrabgang zwar die Strömungsrichtung innerhalb des Strömungskanales um, jedoch bleibt die Krümmung des Strömungskanales identisch erhalten, d.h. die bereits anhaftenden Förderpartikel werden nicht mechanisch von der Rohrinnenwandung entfernt. Der Erfindung liegt die Aufgabe zugrunde, eine Rohrweiche der einleitenden Gattung zu schaffen, die es ermöglicht, ohne auf die Vorteile der bekannten Kükenweichentechnik zu verzichten, im Sinne einer Bausteintechnik durch Austausch, die Kükenweiche auch für Schüttgüter aus der Reihe der Pigmente betriebssicher zu machen.

Diese Aufgabe ist erfindungsgemäß durch die im kennzeichnenden Teil des Patentanspruches 1 angegebenen Merkmale gelöst.

Kern der Erfindung ist dabei, daß das Küken durch einen flexiblen Kunststoffspiralschlauch ersetzt wird und so angeordnet ist, daß sowohl in gerader, als auch in schräger Weichenstellung so vorgekrümmt ist, daß das Schüttgut beim Anhaften durch Fliehkraft auf dem größten Außenradius beim Wechseln der Position von der Schlauchinnenwand abfällt und so ein Einfluß auf den Wandansatz auch prophylaktisch ausgeübt werden kann.

Im Gegensatz zu der aus der DE 38 17 349 C2 bekannten Kükenweichentechnik ist die vorliegende Erfindung durch den anstelle des Küken eingesetzten, den Rohrzugang mit jeweils einen der beiden Rohrabgänge verbindenden, im Bereich der Rohrabgänge an der Innenwand des Gehäuses der Rohrweiche drehbar gelagerten und speziell ausgebildeten, vorzugsweise aus einem Kunststoff wie Polyurethan bestehenden, mit einem vorteilhaften Selbstreinigungseffekt, insbesondere bei förderungsproblematischen Schüttgütern, wie Titandioxid, Ruß oder E-PVC vorteilhaft einsetzbaren Spiralschlauch gekennzeichnet.

In einer ersten Ausgestaltung der Erfindung ist vorgesehen, daß durch einen einseitig gelagerten Führungsarm des Dichtungsträgers eine 360°-Bewegung der Spiralschlauchachse des axial drehbeweglich mit dem Rohrzugang und dem Schieber und durch diesen mit jeweils einem der beiden Rohrabgängen verbundenen Spiralschlauches möglich, wodurch ein zusätzlicher Selbstreinigungseffekt des Spiralschlauches in Richtung der Antriebsachse gegeben ist.

In einer weiteren vorteilhaften Ausgestaltung ist vorgesehen, daß eine Gasdruckfeder Verwendung findet, die einerseits an mit dem Rohrzugang der Weiche festverbundenen Teil des Spiralschlauches angreift und die sich mit ihrem federnden Ende am drehbar gelagerten mit dem anderen Teil des Spiralschlauches verbundenen Schieber abstützt.

Eine derartige Gasdruckfeder hat gegenüber der Verwendung von einer, durch die DE 1 825 073 U1 bekannten, eine ständige Anpressung des Laufes an die Gehäuseinnenwand bewegenden Schrauben den wesentliche Vorteil, daß sie nur eine Federkraft in axialer Richtung jeweils dann entfaltet, wenn der mit dem Spiralschlauch verbundene Schieber mit einem der beiden Rohrabgänge der Rohrweiche gekuppelt, wodurch ein sehr verschleißarmer Antrieb durch eine zeitweilige, geringe Reibung gewährleistet ist. Hierdurch wird weiterhin die Dichtung geschont und der Einsatz von Schraubendruckfedern entfällt.

Ein weiterer wesentlicher Vorteil der Erfindung resultiert aus dem erfindungsgemäß bis zu 180° vorgespannt zwischen dem Rohrzugang und dem jeweiligen Rohrabgang der Rohrweiche angeordneten Spiralschlauch, wodurch das an seiner Innenwand befindliche Schüttgut bei seinem Positonswechsel von dem einen Rohrabgang zu dem anderen Rohrabgang von seiner Schlauchinnenwand abfällt.

Die weitere Ausgestaltung der Erfindung ist den weiteren Unteransprüchen zu entnehmen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, so weit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisierte Vorderansicht einer Rohrweiche;
- Figur 2:: weitere schematische Vorderansicht einer Rohrweiche;
- Figur 3:: schematisierte, perspektivische Schnittdarstellung einer Spiralschlauch-Antriebsanordnung.

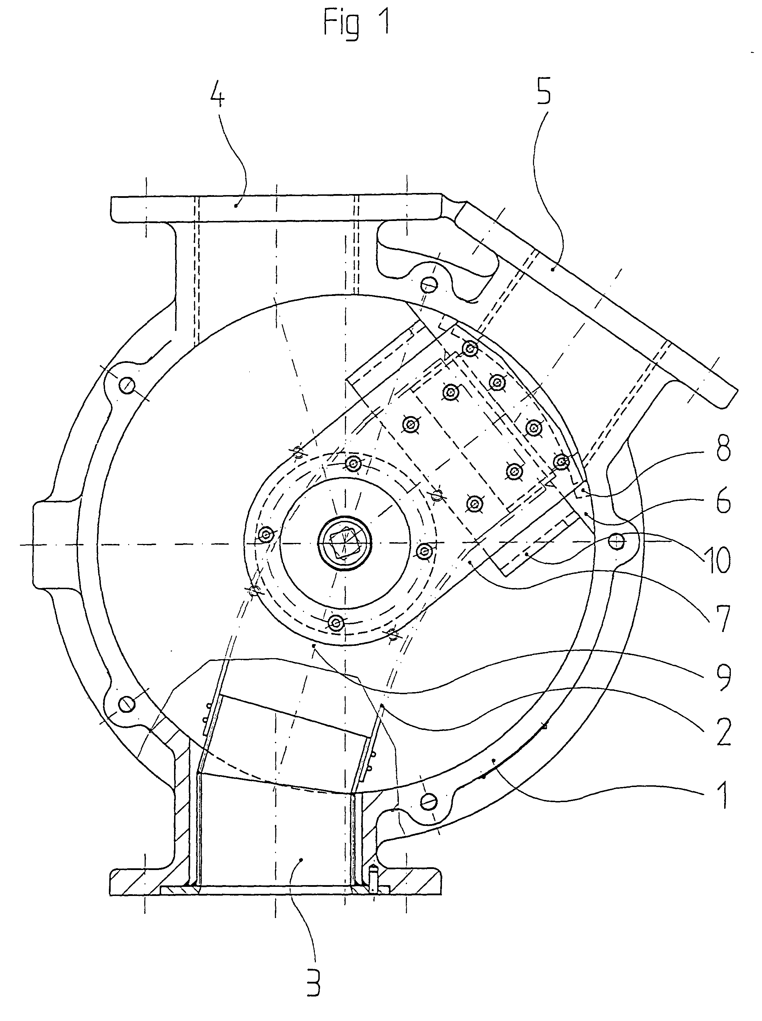

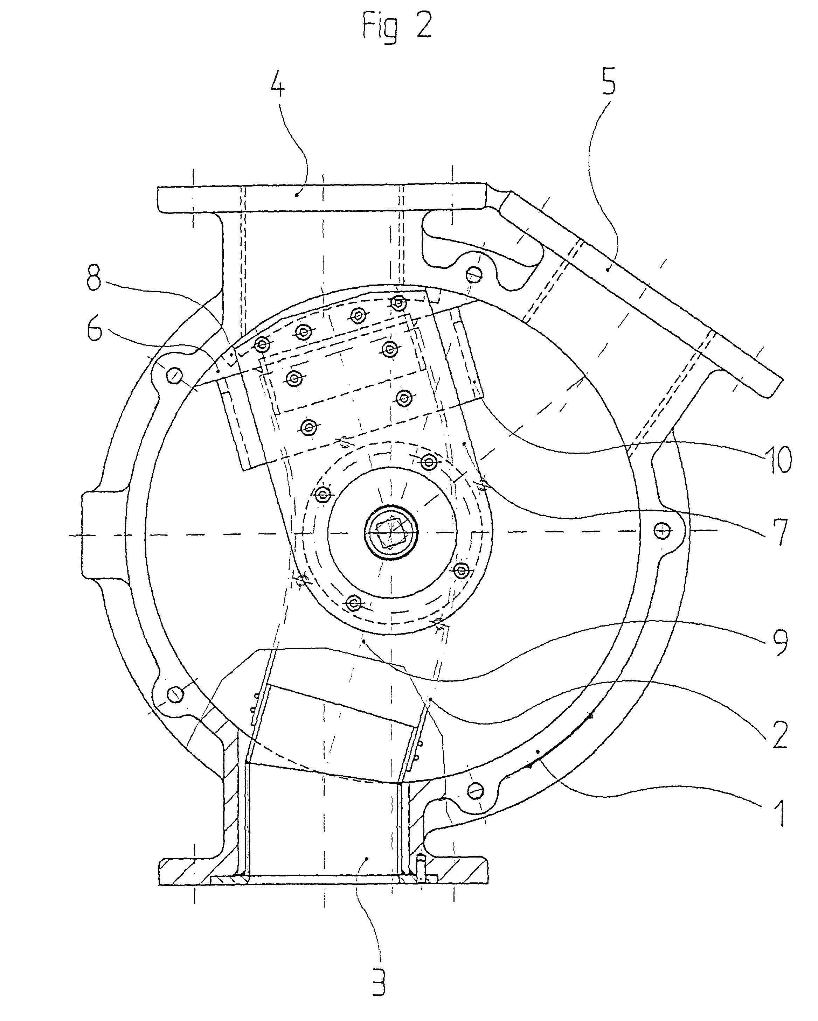

Gemäß der Figuren 1 und 2 ist das Gehäuse 1 der Rohrweiche mit einem Rohrzugang 3 sowie mit zwei Rohrabgängen 4, 5 versehen, die durch einen flexibel ausgebildeten, zwischen diesen vorgekrümmt angeordneten, mit einem Schieber 6 mit Stützwinkel 10 verbundenen, vorzugsweise aus einem Kunststoff wie Polyurethan bestehenden Spiralschlauch 2 miteinanderverbunden sind, wobei der mit dem Rohrzugang 3 verbundene Spiralschlauch 2 durch den mit ihn festverbundenen Schieber 6 jeweils mit einem der beiden Rohrabgänge 4, 5 verbunden ist.

Der an dem einen Ende des Spiralschlauchs 2 angeordnete Schieber 6 ist im Gehäusebereich der beiden Rohrabgänge 4, 5 an der Innenwand des Gehäuses 1 drehbeweglich gelagert.

Der den Rohrzugang 3 mit jeweils einem der beiden Rohrabgänge 4, 5 verbindende, flexibel ausgebildete Spiralschlauch 2 kann bis zu einem Winkel von 180° zwischen diesen Rohranschlüssen 3, 4, 5 gekrümmt vorgespannt sein. Der wesentliche Vorteil dieser gekrümmten Vorspannung des Spiralschlauches 2 im Gehäuse 1 der Rohrweiche besteht darin, daß das an der Gehäuseinnenwand anhaftende Schüttgut bei Positionswechsel des Spiralschlauches 2 von dem Rohrabgang 4 auf 5 oder von dem Rohrabgang 5 auf 4 selbsttätig abfällt. Durch diese erfindungsgemäße Vorspannung des Spiralschlauches 2 zwischen den Rohranschlüssen 3, 4, 5 ist eine prophylaktische Einflußnahme auf den unerwünschten Schüttgut-Innenwandansatz möglich.

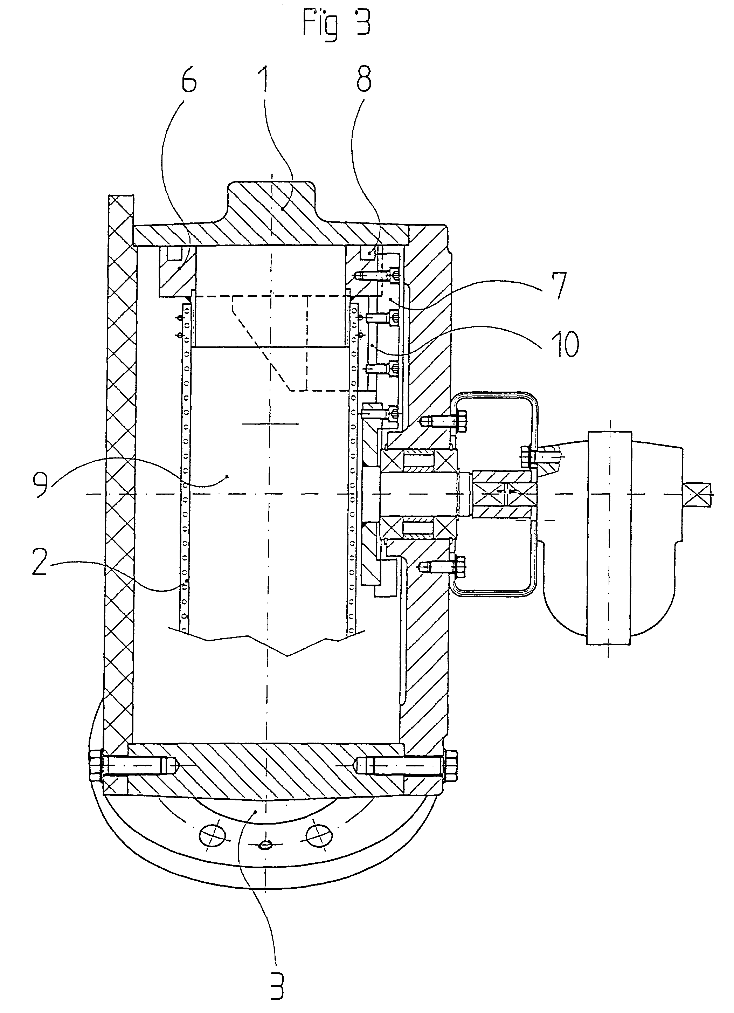

Aus der Figur 3 ist eine weitere vorteilhafte Ausgestaltung der Erfindung hinsichtlich der 360°-Bewegungsmöglichkeit der Spiralschlauchachse 9 des Spiralschlauches 2 in Richtung der Antriebsachse durch einen einseitig gelagerten Führungsarm 7 des Dichtungsträgers 8 ersichtlich, wobei bei dieser speziellen Erfindungsausgestaltung der Spiralschlauch 2 mit dem Rohrzugang 3 und dem Schieber 6 axial drehbeweglich verbunden ist.

Der Vorteil dieser weiteren Ausgestaltung der Erfindung liegt insbesondere darin, daß zusätzlich Reinigungsbewegungen des Spiralschlauches 2 in Richtung der Antriebsachse möglich sind, wodurch der Selbstreinigungseffekt des Spiralschlauches 2 zusätzlich erhöht wird. In den Figuren 1 bis 3 nicht dargestellt, aber in einer weiteren Ausgestaltung der Erfindung vorgesehen, ist die Verwendung einer Gasdruckfeder, die einerseits am, mit dem Rohrzugang 3 verbundenen Teil des Spiralschlauches 2 angreift und die sich mit ihren federnden Ende am, an dem anderen Ende des Spiralschlauches 2 angeordneten, im Bereich der beiden Rohrabgänge 4, 5 an der Innenwand des Gehäuses 1 drehbar gelagertem Schieber 6 abstützt, vorgesehen.

Diese Gasdruckfeder-Anordnung hat gegenüber der bekannten Schraubendruckfeder-Anordnung den wesentlichen Vorteil, daß nur dann eine Federkraft in axialer Richtung entfaltet wird, wenn der Schieber 6 mit dem jeweiligen Rohrabgang 4 oder 5 gekuppelt ist, so daß durch die nur zeitweilige und dabei geringe Reibung ein die Dichtung schonender, verschleißarmer Antrieb gewährleistet ist.

Der aus einem extrem abriebfesten, hochflexiblen, innen glatten und daher strömungstechnisch optimalen, dazu antistatischen und elektrisch leitfähigen sowie schwer entflammbaren Kunststoff, wie beispielsweise Polyurethan, bestehende Spiralschlauch 2, mit einer in die Schlauchwand eingegossenen Spirale, vorzugsweise einer Federstahlwendel, kann entsprechend den vielfältigen Verwendungszwecken unterschiedliche Randstärken von etwa 0,7 mm bis 2,1 mm aufweisen und desweiteren farbig oder transparent ausgebildet sein.

### ZEICHNUNGSLEGENDE

- 1: Gehäuse
- 2: Spiralschlauch
- 3: Rohrzugang
- 4: Rohrabgang
- 5: "
- 6: Schieber
- 7: Führungsarm
- 8: Dichtungsträger
- 9: Spiralschlauchachse
- 10: Stützwinkel

## Patentansprüche

1. Rohrweiche für pneumatisch geförderte Schüttgüter, bestehend aus einem Gehäuse (1) mit einem Rohrzugang (3) und zwei zugeordneten Rohrabgängen (4, 5), und einem, in diesem Gehäuse (1) durch einen Drehzapfen drehbar gelagerten, vorgekrümmten Strömungskanal (2), welcher den Rohrzugang (3) mit jeweils einem der beiden Rohrabgängen (4, 5) verbindet und im Bereich der Rohrabgänge (4, 5) an der Innenwand des Gehäuses (1) über einen mit dichtungsträger (8) Ausgerüsteten Schieber (6) mit Stützwinkel (10) drehbar gelagert ist, dadurch gekennzeichnet, daß der Strömungskanal durch einen flexiblen Spiralschlauch (2) gebildet wird und lediglich ein einseitig gelagerter Führungsarm (7) des Schiebers (6) vorgesehen ist, wodurch eine 360° - Bewegung der Spiralschlauchachse (9) des axial drehbeweglich mit dem Rohrzugang (3) und dem Schieber (6) und durch diesen mit jeweils einem der beiden Rohrabgängen (4, 5) verbundenen Spiralschlauches (2) ausgeführt werden kann.

2. Rohrweiche nach Anspruch 1, dadurch gekennzeichnet, daß eine Gasdruckfeder, einerseits am, mit dem Rohrzugang (3) verbundenen Teil des Spiralschlauches (2) angreift und sich andererseits mit ihrem federnden Ende am, mit dem anderen Ende des Spiralschlauches (2) verbundenen und an der Innenwand des Gehäuses (1) der Rohrweiche drehbar angeordneten Schieber (6) abstützt.

3. Rohrweiche nach einem der Ansprüche 1 oder 2, dadurch gekennzeichnet, daß der, zwischen den, in dem Gehäuse (1) der Rohrweiche angeordneten Rohranschlüssen (3, 4, 5) mit einer Vorkrümmung von bis zu 180° vorgespannte und flexibel ausgebildeten Spiralschlauch (2) aus einem Kunststoff, vorzugsweise aus einem weichmacherfreien Polyurethan besteht sowie durch eine in die Schlauchwand eingegossene Spirale, vorzugsweise eine Federstahlwendel, verdreh- und verschiebefest ausgebildet ist.

4. Rohrweiche nach Anspruch 3, dadurch gekennzeichnet, daß der Spiralschlauch (2) eine Wandstärke von ca. 0,7 mm bis ca. 2,1 mm aufweist und zudem extrem abriebfest, hochflexibel, mit glatter Innenoberfläche und daher strömungstechnisch optimal sowie antistatisch, elektrisch leitfähig und schwerentflammbar ausgebildet ist.

## Claims

1. Pipe switch for pneumatically conveyed bulk materials, comprising a housing (1) with one pipe inlet (3) and two pipe outlets (4, 5) for connection with said inlet, and a pre-curved conduit (2) mounted in the housing (1) in such a way that it is rotatable by a pivot to connect the pipe inlet (3) with one or other of the two pipe outlets (4, 5), and is mounted in the region of the pipe outlets (4, 5) so that it is rotatable on the internal wall of the housing (1) on a slide (6) equipped with a seal holder (8) and having a support angle (10), characterized in that the conduit is a flexible spiral hose (2) and only a unilaterally mounted guide arm (7) of the slide (6) is provided, allowing 360° movement of the axis (9) of the spiral hose (2), which is axially rotatably connected with the pipe inlet (3) and the slide (6) and, via the latter, with one or other of the two pipe outlets (4, 5).

2. Pipe switch according to Claim 1, characterized in that a gas pressure spring engages on the one hand with the part of the spiral hose (2) that is connected with the pipe inlet (3) and on the other hand, at its resilient end, with the slide (6) connected with the other end of the spiral hose (2) and arranged so that it is rotatable on the internal wall of the housing (1) of the pipe switch.

3. Pipe switch according to Claim 1 or 2, characterized in that the spiral hose (2), which is of pre-stressed and flexible construction with an initial curve of up to 180° between the pipe connections (3, 4, 5) in the housing (1) of the pipe switch, consists of a plastic material, preferably an unplasticized polyurethane, reinforced in torsion and shear by a spiral coil, preferably of spring steel, embedded in the hose wall.

4. Pipe switch according to Claim 3, characterized in that the spiral hose (2) has a wall thickness of approx. 0.7 mm to approx. 2.1 mm, is of extremely abrasion-proof and highly flexible construction, with a smooth internal surface and hence optimal flow characteristics, as well as antistatic, electrically conductive, and flame-resistant.

## Revendications

1. Dispositif de séparation de tubes pour des produits en vrac transportés par voie pneumatique, formé d'un carter (1) pourvu d'une entrée tubulaire (3) et de deux sorties tubulaires associées (4, 5), et d'un conduit d'écoulement (2) coudé préalablement qui est monté en rotation dans ledit carter (1) grâce à un pivot, qui relie l'entrée tubulaire (3) à l'une ou l'autre des sorties tubulaires (4, 5) et qui est monté en rotation dans la zone des sorties tubulaires (4, 5), contre la paroi intérieure du carter (1), par l'intermédiaire d'une vanne (6) équipée d'un support d'étanchéité (8) et pourvue d'une équerre d'appui (10), caractérisé en ce que le conduit d'écoulement est défini par un tuyau spiralé flexible (2) et il est prévu simplement un bras de guidage (7) à montage unilatéral, pour la vanne (6), ce qui permet un mouvement à 360° de l'axe (9) du tuyau spiralé (2) relié, en rotation axiale, à l'entrée tubulaire (3) et à la vanne (6) et, grâce à celle-ci, à l'une ou l'autre des deux sorties tubulaires (4, 5).

2. Dispositif de séparation de tubes selon la revendication 1, caractérisé en ce qu'un ressort pneumatique de pression agit d'un côté sur la partie du tuyau spiralé (2) reliée à l'entrée tubulaire (3), et s'appuie de l'autre côté, avec son extrémité faisant ressort, contre la vanne (6) reliée à l'autre extrémité du tuyau spiralé (2) et disposée en rotation contre la paroi intérieure du carter (1) du dispositif de séparation.

3. Dispositif de séparation de tubes selon la revendication 1 ou 2, caractérisé en ce que le tuyau spiralé (2) flexible et contraint avec une courbure allant jusqu'à 180° entre les raccordements tubulaires (3, 4, 5) disposés dans le carter (1) du dispositif de séparation, se compose d'une matière plastique, de préférence un polyuréthanne sans plastifiant, et est conçu pour résister à la torsion et aux déplacements grâce à une spirale coulée dans la paroi de tuyau, de préférence grâce à un boudin en acier à ressorts.

4. Dispositif de séparation de tubes selon la revendication 3, caractérisé en ce que le tuyau spiralé (2) présente une épaisseur de paroi d'environ 0,7 mm à 2,1 mm et est conçu par ailleurs pour être extrêmement résistant à l'abrasion et très flexible, pour présenter une surface intérieure lisse et donc des caractéristiques optimales d'un point de vue de la technique des fluides, pour être antistatique, conducteur d'électricité et enfin peu inflammable.
